# EUROPEAN PATENT APPLICATION

(11) **EP 0 763 559 A2**
(43) Date of publication of application: **19.03.1997**
(21) Application number: 96306154.4
(22) Date of filing: 22.08.1996
(51) Int. Cl.: C08J 5/18, C08L 67/04, C08K 5/00, C08K 5/13

(54) **Stabilized dioxanone polymers**

(30) Priority: 23.08.1995 US 518258
(71) Applicant: UNION CARBIDE CHEMICALS & PLASTICS TECHNOLOGY CORPORATION, Danbury, Connecticut 06817-0001 (US)
(72) Inventor: Farr, Michael Patrick, Somerville, New Jersey 08876 (US); Lincoln, David Marston, Charleston, West Virginia 25311 (US); Moyers, Charles Guthrie, Charleston, West Virginia 25314 (US)
(74) Representative: Allard, Susan Joyce

(57) **Abstract**

Polydioxanone compositions which are stable in an oxygen containing environment, e.g., air, are disclosed. The compositions contain dioxanone and an antioxidant which can inhibit the molecular weight degradation of the polymer. The polymers can be made into a variety of commercially useful products, such as, for example, films, e.g., compostible trash bags, fibers, e.g., sutures, and molded articles, e.g., containers, medical devices, and surgical clips.

## Description

### Field of the Invention

The present invention relates to polymers of dioxanone. More specifically, the present invention relates to polymers of dioxanone having resistance to oxidative degradation.

### Background of the Invention

Polymers made from dioxanone have generally desirable properties. For example, dioxanone homopolymers have a melting point of about 110°C which is low enough for routine processing operations, e.g., molding, and high enough to resist melting and deformation when the products molded from such dioxanone polymers are exposed to high temperatures often encountered during storage and transportation. In addition, dioxanone polymers are hydrolytically unstable which renders them biodegradable. As such, dioxanone polymers are ideal candidates for wide scale applications in which biodegradability is desired, such as, for example, in compostable trash bags and diapers.

However, despite its desirable properties, polydioxanone has not found wide commercial use because of its inability to tolerate standard environmental conditions. Methods have been proposed to control the instability of polydioxanone, for example, by the addition of hydrolytic stabilizers, such as calcium salts, or by carefully controlled packaging in order to isolate the polydioxanone products from the environment. As a result, the commercial use of polydioxanone has been generally limited to highly specialized applications wherein the exposure to the environment can be controlled, e.g., degradable sutures and surgical devices, such as, for example, surgical clips.

Accordingly, improved compositions comprising polydioxanone are desired which can render it suitable for wide scale commercial use.

### Summary of the Invention

In accordance with the present invention, it has been found that in addition to hydrolytic instability, polydioxanone is also susceptible to oxidative degradation. Indeed, it is believed that this susceptibility to oxidative degradation has been primarily responsible for the commercial failure of polydioxanone. This finding is unexpected in view of the oxidative stability of similar lactone derived polymers, such as, for example, polycaprolactone.

By the present invention, it is now possible to provide compositions comprising polydioxanone which are stable in an environment containing oxygen, e.g., air. As a result, the compositions of the present invention can have wide ranging commercial uses, such as, for example, films, e.g., trash bags and diapers, fibers, e.g., sutures, and molded articles, e.g., containers, tools, fixtures, medical devices, and the like. Quite surprisingly, in accordance with the present invention it is possible to maintain the biodegradability of articles made from the polydioxanone polymers by permitting hydrolytic or ultraviolet degradation to occur at a desired rate and still inhibit oxidative degradation.

### Detailed Description of the Invention

The monomer used in preparing the polydioxanone polymers of the present invention is 1,4-dioxanone (referred to in the art as "p-dioxanone"). Various methods are known for the manufacture of p-dioxanone. One method is by reacting ethylene glycol or diethylene glycol, metallic sodium and chloroacetic acid. Another method is by reacting ethylene glycol, formaldehyde and carbon monoxide. Still another method is by oxidizing dioxanone.

Preferably, in accordance with the present invention, the dioxanone monomers are prepared by reacting diethylene glycol (sometimes referred to herein as "DEG") in the vapor phase over heterogeneous transition metal catalysts such as, for example, copper and zinc on silica as described in U.S. Patent No. 5,310,945 or non-supported heterogeneous transition metal catalysts, such as, for example, barium promoted copper chromite. The reaction temperature is preferably from about 200° to 300°C. The reaction pressure is preferably from about 0.5 to 5 atmospheres. As used herein, the values for pressure are given with respect to absolute pressure. Preferably, the reaction provides from about 60 to 99 percent yield of to p-dioxanone and from about 60 to 99 percent conversion of diethylene glycol to p-dioxanone. Hydrogen and nitrogen are preferably used to activate the catalyst and as a carrier gas. The space velocity of the carrier gas is typically from about 100 to 1,500 cubic centimeters ("cc") at 0°C, 1 atmosphere per cc of catalyst per hour. The space velocity of the DEG feed is preferably 0.3 to 1.1 grams ("g") of DEG per of catalyst per hour. Further details concerning the manufacture of p-dioxanone are generally known to those skilled in the art.

Preferably, the dioxanone monomer has a purity of at least about 99.0 weight percent, more preferably at least 99.5 weight percent and most preferably at least 99.9 weight percent, based upon the weight of dioxanone monomer and residual diethylene glycol.

In the manufacture of the dioxanone monomer, it is difficult by distillation alone to achieve purities of 99.5 weight percent or higher. Accordingly, it is preferred that additional purification methods, such as, for example, membrane purification, adsorption, and more preferably, crystallization are used to enhance the purity of the dioxanone monomer.

One crystallization technique for purifying the dioxanone monomer is by solvent crystallization. Solvent crystallization involves dissolving the contaminated stream containing dioxanone in a suitable solvent, such as, for example, ethyl acetate, cooling the solution to a temperature effective to promote the formation of crystals, e.g., -20°C, and generating crystals by known methods, such as, for example, introducing pure dioxanone crystals (known in the art as "seeding"). After the crystals of dioxanone have formed, the mixture is filtered to recover the crystals of dioxanone. Multiple recrystallizations can be conducted as desired in order to obtain the desired purity. Further details of solvent crystallization are known to those skilled in the art.

A preferred method for purifying the dioxanone monomer of the present invention is by melt crystallization. In melt crystallization, the impure monomer feed is melted and passed over a surface having a temperature below the melting point of the crude monomer, e.g., from about -20°C to 30°C., to solidify a fraction of the crude feed material monomer comprising the dioxanone monomer. Impurities, e.g., diethylene glycol, substantially remain in the liquid phase are removed. Preferably, after the feed material is processed, the temperature of the solidified crystals of dioxanone monomer is increased to a temperature effective to cause the outer surface of the crystals to melt (known in the art as "sweating"). This sweating process causes additional diethylene glycol which is entrapped in the solidified monomer to melt and thus be removed. After the sweating process is completed, the remaining portion of the crystallized monomer is melted and recovered as product. This recovered product can then be recrystallized as many times as necessary in order to achieve the desired purity. Quite advantageously, the melt crystallization process can be conducted without the presence of any solvents, such as, for example, ethyl acetate. Further details concerning the process and apparatus for conducting melt crystallization are known to those skilled in the art. Melt crystallization equipment is available, for example, from Sulzer Chemtech, Toronto, Canada.

The antioxidants suitable for use in accordance with the present invention are those which can substantially inhibit the oxidative degradation of the polydioxanone polymers. Oxidative degradation of polydioxanone is evidenced, for example, by a reduction in the molecular weight of the polymer upon exposure to oxygen, e.g., air. Preferably, the antioxidant is effective to cause the polydioxanone to retain at least 70 percent, more preferably, at least 80 percent and most preferably, at least 90 percent of its original molecular weight upon exposure to air at ambient conditions for 30 days. It is also preferred that the antioxidant be effective to cause products made from the polydioxanone to have a shelf life of at least 2 years, preferably at least 3 years and most preferably at least 5 years upon exposure to air at ambient conditions. Furthermore, it is preferred that the antioxidants of the present invention do not significantly adversely affect at least one of the other degradation mechanisms of the polymer, e.g., hydrolytic degradation or ultraviolet degradation. As used herein, the term, "significantly adversely affect" means that the degradation rates by either hydrolytic degradation or ultraviolet degradation are at least 80 percent, preferably at least 90 percent and most preferably at least 95 percent of the degradation rate of a polydioxanone polymer without an antioxidant over a 30 day period at ambient conditions.

A preferred measurement of oxidative degradation in accordance with the present invention is by an Oxidation Induction Time experiment, as measured in accordance with ASTM-3895-94, except that the ASTM method specifies a particular heating rate whereas the heating rate is not critical for purposes of the present invention. Preferably, polymer compositions containing the antioxidants in accordance with the present invention provide an Oxidation Induction Time at 170° C of at least 10 minutes, more preferably at least 30 minutes and most preferably at least 60 minutes.

Preferably, the antioxidants are selected from the group consisting of hindered phenols, phosphites, phosphines, phosphonites, thioethers, arylamines, hindered amines, hydroxy amines or mixtures thereof.

Examples of antioxidants are: hindered phenols such as tetrakis[methylene(3,5-di-tert- butyl-4-hydroxyhydrocinnamate)]methane, bis[(beta-(3,5-ditert-butyl-4-hydroxybenzyl)methylcarboxyethyl)]sulphide, 4,4'-thiobis(2-methyl-6-tertbutylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl )phosphite and di-tert-butylphenyl-phosphonite; thio compounds such as dilaurylthiodipropionate, dimyristylthiodipropionate, and distearylthiodipropionate; various stability functionalized siloxanes; and various amines such as polymerized 2,2,4-trimethyl-1,2-dihydroquinoline.

The amount of antioxidant used in the compositions of the present invention typically ranges from about 0.05 to 1 weight percent, preferably from about 0.05 to 0.8 weight percent and more preferably from about 0.1 to 0.5 weight percent, based upon the weight of polydioxanone and antioxidant. Further details concerning the selection and amount of antioxidants are known to those skilled in the art.

The polydioxanone polymers can be homopolymers of polydioxanone, copolymers of polydioxanone and various other monomers or blends with other polymers. Typical comonomers include, for example, polysaccharides, e.g., starch, cyclic esters e.g. caprolactone, lactide, glycolide; cyclic amides, cyclic carbonates and epoxides. The homopolymers and copolymers can be linear or branched and can be random, block or graft copolymers. The polydioxanone polymers can also be blended with other polymers such as, for example, those selected from the group consisting of starch, polycaprolactone, polylactide, aliphatic polyesters, aliphatic polyamides or aliphatic polyurethanes. Further details concerning the selection and amounts of such other monomers and polymers are known to those skilled in the art.

The polydioxanone polymers of the present invention are prepared by polymerizing the dioxanone monomer at a temperature of from about 10 to 150°C. and preferably from about 110 to 130 °C., in the presence of suitable catalysts effective to promote the polymerization, such as, for example, zinc and aluminum alkyls, aluminum alkoxides and boron compounds such as BF3. Preferred catalysts include tin octoate or titanate base catalysts. The polymerization is conducted at a pressure of from about 0.4 to 5 atmospheres and preferably from about 0.5 to 1.5 atmospheres. The reaction can be conducted by a continuous or batch process, either in the liquid phase or gas phase. Typical reaction times range from about 240 to 960 minutes, more often from about 300 to 480 minutes.

In addition to the dioxanone monomer, the polymerization reaction is preferably conducted in the presence of an initiator, e.g., diethylene glycol or other mono-, di-, tri, or poly-functional alcohols or amines, in an amount from about 0.005 to 2 weight percent, more preferably from about 0.05 to 1 weight percent, and most preferably from about 0.05 to 0.5 weight percent, based on the weight of diethylene glycol and the initiator. Diethylene glycol is a preferred initiator. In the polymerization reaction, the amount of diethylene glycol must be carefully controlled to obtain the desired molecular weight. If purified dioxanone monomer is used as a reactant, then the desired amount of diethylene glycol can be conveniently added to the reaction mixture. If purified dioxanone monomer is not employed as an reactant, and the level of diethylene glycol is higher than that desired for the polymerization reaction, then a compound effective to react with, e.g., tie up, the diethylene glycol can be introduced in an amount effective to provide the desired amount of free diethylene glycol. These compounds are known in the art "blocking agents". The amount and selection of initiators should be adjusted to give the desired molecular weight of the polymer.

The antioxidants described herein can be introduced either prior to, simultaneously with, or subsequent to the polymerization of the dioxanone monomer. Preferably, the antioxidants are introduced prior to the polymerization reaction. In addition to the antioxidants, other inhibitors, such as, for example, hydrolytic inhibitors or ultraviolet inhibitors, can be added to the polymer composition in order to achieve the desired degree of biodegradability of the final polymer. Typical hydrolytic stabilizers include, for example, calcium salts or amine containing compounds. Typical ultraviolet stabilizers include, for example, hindered amines. However, it is preferred in accordance with the present invention that at least one mechanism for facilitating biodegradability, e.g., by hydrolytic degradation or ultraviolet degradation, is retained. Typically, the total amount of inhibitors other than antioxidants ranges from about 0.01 to 10 weight percent, based on the total weight of the polymer composition. Other additives conventionally added to such polymer compositions, include, for example, lubricants, microtalc, stabilizers, compatabilizers, pigments, plasticizers, etc. Further details concerning the selection and amount of the other additives and inhibitors are known to those skilled in the art.

The polymer compositions produced in accordance with the present invention typically have a melting point of from about 80 to 110 °C., preferably from about 100 to 105 °C., and a glass transition temperature of from about -40 to -15°C. and preferably from about -30 to -15 °C. The density of the polymer typically ranges from about 1.1 to 1.5 g/cc and preferably from about 1.2 to 1.3 g/cc. The polymer compositions typically have a Melt Flow of from about 0.1 to 7, preferably from about 0.2 to 2 and more preferably from about 0.5 to 1. As used herein, the term "Melt Flow" means grams of material that flow through a die in ten minutes at 150° C as described in ASTM D 1238-86.

Typically, the polymers of the present invention have a weight average molecular weight of from about 500 to 800,000 grams/gram mole, and preferably from about 50,000 to 500,000 grams/gram mole. Typically, the number average molecular weight ranges from about 500 to 700,000 grams/gram mole, preferably from about 30,000 to 500,000 grams/gram mole. The weight average molecular weights and number average molecular weights can be determined by gel permeation chromatography, the details of which are known to those skilled in the art. The Polydispersity Index (M_{w}/Mₙ) typically ranges from about 1.3 to 10. As oxidative degradation occurs, a decrease in the Polydispersity Index is often observed. Accordingly, for purposes of the present invention, it is preferred that the ratio of the Polydispersity Index measured one year, preferably two years, and more preferably three years after the polymer has been manufactured is at leat 80% and preferably 90% of the Polydispersity Index measured at the time of manufacture.

Upon completion of the polymerization reaction, the polymer can be recovered by any means known to those skilled in the art. Preferably in accordance with the present invention, the polymer is transported in its molten state directly to an extruder or molding machine in order to produce the desired product. These products can be produced in any form known to those skilled in art, such as, for example, fibers, pellets, molded articles, films, sheets, and the like.

Preferably, the molten reaction product is passed to an extruder in order to produce particles having a particle size of from about 25 microns ("µ") to 1 centimeter, e.g., granules, spheres or pellets, i.e., cylindrical pellets having a particle size, i.e., diameter, of about 0.25 to 1 centimeter. Such particles are generally desirable for transporting and handling prior to processing to form the desired articles. Typically, the cylindrical particles have a bulk density, i.e., after settling in a drum, of from about 1 to 2 g/cc, preferably from about 1.25 to 1.75 g/cc. Extrusion conditions typically include a temperature of from about 105 to 190 °C. and a pressure of from about 31 to 100 atmospheres. Suitable extruders are available for example, from Killion, Extruders, Inc., Cedar Grove, NJ. Further details concerning extrusion processes and equipment suitable for use in accordance with the present invention are known to those skilled in the art.

The films comprising the polydioxanone compositions of the present invention can be cast or blown using any process or equipment known to those skilled in the art. Typically, the films have a tensile strength (machine direction) of from about 3000 to 9000 psi, preferably from about 6000 to 8000 psi, with an elongation of about 300 to 600 percent, preferably from about 400 to 550 percent, as measured by ASTM D 882. Typically, the polymers have a transverse direction tensile strength from about 3000 to 8000 psi, preferably from about 4000 to 6000 psi, with an elongation of from about 300 to 800 percent, preferably from about 550 to 750 percent. The dart drop impact properties as measured by ASTM D1709-85 typically range from about 100 to 200 g/mil and preferably range from about 140 to 180 g/mil. The Elmdorff tear properties as measured by ASTM D1922 in the machine direction typically range from about 100 to 500 g/mil and preferably range from about 200 to 400 g/mil. In the transverse direction the Elmdorff tear properties typically range from 400 to 1200 g/mil and preferably range from about 600 to 1000 g/mil. Typically, the films have a thickness of from about 0.5 to 2 mils, preferably from about 0.8 to 1.25 mils, and more preferably from about 0.9 to 1 mil.

The polymer compositions of the present invention can be used in the fabrication of a wide variety of products including, for example, sheets, i.e., greater than 10 mil thick, films, i.e., less than 10 mil thick, e.g., trash bags, fibers, e.g., sutures, fishing line and non-woven fabrics and molded articles, e.g., containers, tools and medical devices, such as, for example, staples, clips, pins, prostheses, etc. Since the articles are rendered stable to oxygen environments by virtue of the present invention, the extent of the biodegradability can be controlled by controlling the addition of hydrolytic stabilizers or ultraviolet stabilizers as described above. This provides a great deal of flexibility in the design of articles to be manufactured using the polymers of the present invention. It also provides for an expansive variety of possible end uses. One particularly preferred end use in accordance with the present invention is to provide compostible trash bag. As used herein, the term "compostible" means a material that meets the following three requirements: (1) is capable of being processed in a composting facility for solid waste; (2) if so processed, will end up in the final compost; and (3) if the compost is used in the soil, the material will ultimately biodegrade in the soil.

The following Examples are provided for illustrative purposes and are not intended to limit the scope of the claims which follow.

The following ingredients were used in the Examples.

DEG - diethylene glycol available from Union Carbide Corporation, Danbury, CT.

Cu 1186T - a barium promoted, copper chromite catalyst available from Engelhard Corporation, Elyria, OH.

DABCO T9 - tin octoate available from Air Products, Allentown, PA.

Irganox 1010 - a tetrakis[methylene(3,5-di-tert-butyl-4-hydroxy-hydrocinnamate)]methane antioxidant available from Ciba-Geigy, Hawthorne, NY.

Tone® P-787 - polycaprolactone having a weight average molecular weight of 80,000 g/gmole available from Union Carbide, Danbury, CT.

All buffers and standards for ASTM 533 are available from Aldrich Chemical Company, Inc., Milwaukee, WI.

### EXAMPLE 1

### MANUFACTURE OF P-DIOXANONE

About 2000 g of diethylene glycol, in a continuous flow of about 500 g per hour, were passed in a vapor state into a reaction chamber which contained about 1400 g of barium promoted, Cu 1186T catalyst. The reaction temperature was maintained between 220 and 280° C. The vapor was passed through the chamber and condensed. The condensate contained 1733 g of 1,4-dioxanone, 622 g of unreacted DEG. The product was converted at a conversion of 68.9 percent (moles of DEG in minus moles of DEG out divided by moles of DEG in) with a corresponding yield of 86.6 percent (weight of 1,4-dioxanone out divided by weight of DEG in).

### EXAMPLE 2

### PURIFICATION BY MELT CRYSTALLIZATION

A solution (750.2 g) consisting of 99.05 weight percent 1,4-dioxanone and impurities (mostly unreacted diethylene glycol) measured by gas chromatographic analysis was produced in accordance with the procedure set forth in Example 1.

A laboratory falling film crystallizer was used in order to purify the reaction product described above. The crystallizer comprised a two liter crystallizer kettle fitted with a heating element, a one inch ID by one meter tall jacketed vertical tube, an exit port for recycling residue, recycle heaters, a feed pump, a film distributor and a coolant system for the jacketed section of the vertical tube. A schematic of this apparatus is shown in Figure 6 of U.S. Patent No. 5,430,194.

The procedure used to purify the product was as follows: Approximately 1500 cc of the above described solution comprising p-dioxanone and impurities were charged to the crystallizer kettle. The kettle was then heated to slightly above its freezing point, e.g., 30°C. The solution was then circulated out of the exit port through the recycle heaters, into the feed pump, out from the feed pump, into the film distributor, out of the film distributor and allowed to pass downward along the inside surface of the falling film crystallizer back to the crystallizer kettle. The circulation rate was set at about 1000 cc per minute. The falling film crystallizer was then cooled by decreasing the temperature of the coolant, i.e., propylene glycol/water 50/50% by weight, circulating through the jacket to a temperature of about 15 to 20 °C until a film of crystalline material formed on the inside walls of the falling film crystallizer, i.e., the ICT. Circulation was maintained at the ICT for 5 minutes and then the temperature of the coolant was gradually reduced until about 80% of the feed in the kettle was depleted. At that point, the material buildup on the internal walls of the crystallizer was approximately one-fourth of an inch thick. Throughout this time the crystallizer kettle was maintained slightly above the freezing point of the material.

After the cooling cycle was completed, the remainder of the product solution in the crystallizer kettle was discharged and then the temperature of the coolant was gradually increased until a portion of the crystals started to melt, i.e., sweat, i.e., about 30°C. Approximately 50 cc of material was collected during the sweating cycle and removed from the crystallizer kettle. Then the remainder of the product was melted and collected in the crystallizer kettle. About 371.2 grams of residue were obtained having a composition of 98.34 weight percent 1,4-dioxanone. The sweat (63.02 g) contained 99.39 weight percent 1,4-dioxanone. The product melt (314.88 g) contained 99.96 weight percent 1,4-dioxanone.

### EXAMPLE 3

### MANUFACTURE OF POLYDIOXANONE

About 611 g of dry, highly purified p-dioxanone (99.5+% pure) and 3.05 g of Irganox 1010 was charged to an oven dried, 1000 ml, three neck flask fitted with a dry argon purge and an overhead agitator. The flask was lowered into an oil bath and the temperature was raised to 110° C. As the material temperature approached 90° C, 0.28 ml of diethylene glycol and 0.27 ml of a 13.74% solution of T9 in toluene was charged to the reactor. The mixture was allowed to react for 280 minutes. The melt was discharged from the reactor into trays and put into a desiccator to cool.

Into a 500 ml three neck flask setup as described above was charged with 100.75 g of the polymer made in Example 1. To the polymer was added 0.50 g of Irganox 1010. The mixture was heated to 118° C and mixed for 30 minutes. The mixture was discharged from the reactor into aluminum trays.

Both the polymers obtained from the reactions described above were placed in a vacuum oven at 70° C with an argon purge and 28 mm of Hg vacuum and dried overnight to remove residual monomer.

The polydioxanone so produced can then be extruded or molded into desired forms, such as, for example, sheets, fibers, pellets, films and the like. The details of such operations are known to those skilled in the art.

### EXAMPLE 4

### EXTRUSION OF POLYDIOXANONE

The following Example demonstrates the effect of an antioxidant on the control of the molecular weight degradation of the polymers of the present invention. Control Samples A and B were made in accordance with the procedure described in Example 3 except that the Irganox 1010 was omitted. Sample C was prepared in accordance with the procedure set forth in Example 3.

To remove the residual monomer from the polymer, a Berstoff 25 mm twin screw extruder available from Berstoff Company, Charlotte, NC._was used. A single vent port with a receiving flask and vacuum pump were attached on the fifth zone of the extruder. The following temperature profiles were used:

**TABLE I**

| **Sample** | **Control A** | **Control B** | **C** |
|---|---|---|---|
| **Zone 1 (°C)** | 105 | 77 | 66 |
| **Zone 2 (°C)** | 110 | 80 | 109 |
| **Zone 3 (°C)** | 128 | 124 | 127 |
| **Zone 4 (°C)** | 134 | 134 | 141 |
| **Zone 5 (°C)** | 127 | 129 | 141 |
| **Zone 6 (°C)** | 107 | 99 | 141 |
| **Die (°C)** | 105 | 80 | 93 |
| **RPM** | 260 | 280 | 120 |
| **Melt Temp (°C)** | 118 | 90 | 143 |
| **Feeder Setting** | 22 | 8 | 8 |
| **Result** | brittle product | Very brittle | ductile |

From the data presented in Table 1, it can be seen that Control Samples A and B provided products which were brittle from molecular weight degradation. In the case of Control Sample B, the temperatures were lowered and the product still came out brittle, an indication of molecular weight degradation. Control Sample B had a significant amount of residual monomer in it. In contrast, Sample C, which had the Irganox 1010 added, provided a ductile product. The extruded from Sample C was dried to as low as four percent residual monomer in one pass. No qualitative loss of mechanical integrity was lost due do extrusion degradation.

### EXAMPLE 5

### OXYGEN INDUCTION TIME

Control Sample A, Sample C and a sample of Tone® P-787 were run for Oxidation Induction Times according to ASTM-3895-94 as described above. Ten milligram samples where placed in aluminum differential scanning calorimetry sample pans. In series, each sample was heated to 170° C in a nitrogen atmosphere. Once at temperature, the purge was switched from nitrogen to oxygen. The sample was held at temperature until the onset of oxidation exotherm was observed or for 60 minutes. The results are tabulated in Table II.

**Table II**

| Sample | Oxidation Induction Time |
|---|---|
| Tone® P-787 | 60 minutes |
| Control Sample A | 1.4 minutes |
| Sample C | 60 minutes |

The data from Table II demonstrate that the lactone based polymer Tone® P-787 had an oxidation induction time of 60 minutes which is generally considered to be indicative of an acceptable degree of oxidative degradation resistance for a wide variety of commercial applications. However, when polydioxanone, i.e., Control Sample A, which is a similar lactone based polymer was tested, the oxidation induction time was only 1.4 minutes. Thus, it has been found that in accordance with the present invention that the inability to tolerate oxygen containing environments may have been the primary cause of commercial failure of polydioxanone based products. This finding was quite surprising and unexpected in view of the oxidative stability of polycaprolactone. In addition, in accordance with the present invention it has been found that the introduction of a small amount of an antioxidant, e.g., Irganox 1010, provides a simple solution to the problem of oxidative degradation of polydioxanone. Those skilled in the art will recognize that although this experiment has been conducted with Irganox 1010, a variety of other antioxidants including, but not limited to the ones set forth in the specification above may be used to control the oxidative degradation of polydioxanone.

### EXAMPLE 6

### MOLECULAR WEIGHT DEGRADATION

To follow the long term stability of stabilized polydioxanone, samples prepared by the methods described in the above Examples (both with Irganox 1010 "Sample D" and without "Control Sample E") were placed in an oven with a dry nitrogen purge set at 50° C. Samples were taken periodically and the molecular weight was determined by gel permeation chromatography (GPC). The polystyrene equivalent molecular weights were compared to that of the polymer at the beginning of the test. The GPC was done using methylene chloride as the solvent. The retention of molecular weight is shown in Table III.

**Table III**

| | Molecular Weight Retention, % | |
|---|---|---|
| Time, Days | Sample D | Control Sample E |
| 0 | 100 | 100 |
| 8 | 100 | 72 |
| 22 | 94 | 70 |
| 36 | 98 | 72 |

This example demonstrates that the molecular weight degradation can be substantially improved by the addition of an antioxidant.

### EXAMPLE 7

### MANUFACTURE OF BLOWN FILM

A 3/4" Brabender film line was used to blow film of polydioxanone prepared in accordance with Example 3, both without Irganox 1010 "Control Sample F, G" and with Irganox 1010 "Sample H". The conditions used were as follows:

**Table IV**

| Sample | Melt temp (°C) | Barrel temps | 1 & 2 (°C) | Die temp (°C) | Amps | RPM |
|---|---|---|---|---|---|---|
| F(control) | 140 | 143 | 140 | 140 | 0.9 | 14 |
| G (control) | 124 | 121 | 120 | 120 | 3.25 | 14 |
| H | 145 | 140 | 140 | 140 | 2.5 | 15 |

Control Samples F and G had a viscosity at the die which was very low. A stable bubble was obtained initially then lost. The extrudate was very stringy and brittle, indicative of oxidative degradation break down of the molecular weight. In the case of Sample H, a stable bubble was formed and film was extruded until the sample ran out. The qualitative film properties were representative of a tough ductile film good for packaging, bags or diapers, for example.

### EXAMPLE 8

### BIODEGRADATION TEST

The biodegradation test was performed in accordance with ASTM D-5338 (also known as the modified Sturm test). One inch squares of film of each polymer (polydioxanone 3 mil "Sample I" and Tone® P-787, 1.5 mil thick) were used in the test. Carbon dioxide was trapped using barium hydroxide. Dextrose was used as a control. The data is shown in Table V below.

**Table V**

| | Theoretical Carbon Dioxide, % | | |
|---|---|---|---|
| Time (Days) | Dextrose | Sample I | Tone® P-787 |
| 3 | 6 | 1 | 0 |
| 6 | 16 | 2 | 1 |
| 10 | 22 | 5 | 2 |
| 15 | 23 | 10 | 3 |
| 28 | 28 | 14 | 4 |
| 45 | 32 | 15 | 10 |

This Example demonstrates that polydioxanone polymers which have been stabilized to inhibit the oxidative degradation can nonetheless retain their biodegradability. As such, the polydioxanone polymers of the present invention are ideally suited for applications where biodegradability is desired, such as, for example, in films, such as trash bags or diapers, or disposable containers and medical devices, such as, sutures, clamps and the like.

Although the invention has been described with respect to specific aspects, those skilled in the art will recognize that other aspects are intended to be included within the scope of the claims which follow. For example, antioxidants, comonomers and additives other than those specifically described herein can be used in the polymers of the present invention.

## Claims

1. A film comprising: (i) a polymer of dioxanone having a weight average molecular weight of from 500 to 800,000 grams/gram mole, a Polydispersity Index of from 1.3 to 10, a polymer density from 1.1 to 1.5 grams/cc, a melting point of from 80 to 110°C and a Melt Flow from 0.1 to 7; and (ii) an antioxidant; said film having a tensile strength of from 20.67 to 62.01 MPa (3000 to 9000 psi) in the machine direction and from 20.67 to 55.12 MPa (3000 to 8000 psi) in the transverse direction, an elongation of from 300 to 600 percent in both the machine and transverse directions, a dart drop value of from 2.5 to 5 grams/mm (100 to 200 grams/mil) and an Elmdorf tear strength of from 2.5 to 12.5 grams/mm (100 to 500 grams/mil) in the machine direction and from 10 to 30 grams/mm (400 to 1200 grams/mil) in the transverse direction.

2. A film as claimed in claim 1 wherein the amount of the antioxidant is in the range of from 0.1 to 5 wt percent based on the total weight of the film.

3. A film as claimed in claim 1 or claim 2 wherein the antioxidant is a hindered phenol, phosphite, phosphonite, phosphine, thioether, arylamine, hindered amine, hydroxy amine or a mixture thereof.

4. A film as claimed in any one of the preceding claims wherein the antioxidant is tetrakis[methylene(3,5-di-tert-butyl-4-hydroxyhydrocinnamate)]methane.

5. A film as claimed in any one of the preceding claims wherein the film further comprises at least one of a hydrolytic stabilizer or an ultraviolet stabilizer.

6. A film as claimed in any one of the preceding claims wherein the polymer is a copolymer of p-dioxanone and a comonomer which is a glycoside, lactide, carbonate, lactone, lactam, epoxide or a mixture thereof.

7. A film as claimed in any one of the preceding claims wherein the polymer is a blend of a polymer of dioxanone and at least one of a starch, polycaprolactone, polylactide, aliphatic polyester, aliphatic polyamide or aliphatic polyurethane.

8. A film as claimed in any one of the preceding claims wherein having an Oxidation Induction Time of at least 10 minutes.

9. A film as claimed in any one of the preceding claims wherein the amount of antioxidant is effective to inhibit the degradation of the molecular weight of the polymer in the presence of oxygen.

10. A film as claimed in claim 9 wherein the antioxidant does not significantly adversely affect at least one of the hydrolytic degradation or the ultraviolet degradation.

11. A composition comprising: (i) a polymer of dioxanone having a weight average molecular weight of from 500 to 800,000 grams/gram mole, a Polydispersity Index of at least 1.3, a polymer density of from 1.1 to 1.5 grams/cc, a melting point of from 80 to 110°C and a Melt Flow of from 0.1 to 7; and (ii) an antioxidant.

12. A composition as claimed in claim 11 in the form of particles having a particle size of from 25µ to 1 centimeter and a bulk density of from 1.1 to 2 grams/cc.

13. A composition as claimed in claim 11 in the form of fibers, a molten liquid or a sheet.

14. A process for producing particles of polydioxanone having a particle size of from 25µ to 1 centimeter and a bulk density of from 1.1 to 2 grams/cc, which process comprises:
(a) contacting a purified monomer feed comprising at least 99.5 wt % p-dioxanone based on the total weight of the monomer feed with a catalyst effective to promote the polymerization of p-dioxanone at a temperature of from 10 to 150°C and a pressure of from 0.5 to 5 atmospheres to form a reaction producing comprising a polymer of p-dioxanone; and
(b) extruding the reaction product at a temperature of from 100 to 180°C and a pressure of 31 to 1000 atmospheres in the presence of an antioxidant to form said particles.

15. A process as claimed in claim 14 which further comprises providing the purified monomer feed by purifying a crude monomer comprising at least 0.5 wt % diethylene glycol based on the total weight of p-dioxanone and diethylene glycol by crystallizing a fraction of the crude monomer comprising the purified monomer and recovering said fraction.

16. A process as claimed in claim 15 wherein the crystallization is conducted by forming a solution of the crude monomer dissolved in a solvent, forming crystals of the purified monomer from the solution and recovering the crystals.

17. A process as claimed in claim 15 wherein the crystallization is conducted by contacting the crude monomer in a molten state with a surface having a temperature below the melting point of the crude monomer to solidify the fraction of the crude monomer comprising the purified monomer, separating the remaining molten fraction from the solid fraction and recovering the solid fraction.

18. A process as claimed in claim 17 wherein the purified monomer comprises at least 99.9 wt 20% p-dioxanone based on the total weight of p-dioxanone and diethylene glycol.
